# EUROPEAN PATENT SPECIFICATION

(11) **EP 1 682 813 B1**
(45) Date of publication and mention of the grant of the patent: **11.03.2009**
(21) Application number: 04729369.1
(22) Date of filing: 24.04.2004
(51) Int. Cl.: F16N 15/00, F16N 39/04, F16N 29/00

(54) **APPARATUS AND METHOD FOR HEATING AND MELTING SOLID LUBRICANTS IN THE DELIVERY DRUM**
VERFAHREN UND VORRICHTUNG ZUM AUFHEIZEN UND SCHMELZEN VON STARRSCHMIERSTOFFE
APPAREIL ET PROCEDE POUR CHAUFFER ET FONDRE DES LUBRIFIANTS SOLIDES DANS LE TAMBOUR D'AMENEE

(30) Priority: 23.10.2003 IT MI20032071
(43) Date of publication of application: 26.07.2006
(73) Proprietor: Ravarini Castoldi & C. S.R.L., 20139 Milano (IT)
(72) Inventor: RAVARINI, Luigi, I-20145 Milano (IT)
(74) Representative: Radünz, Ingo
(86) International application number: PCT/EP2004/004360
(87) International publication number: WO 2005/040665

(56) References cited:
- GB-A- 141 930
- GB-A- 710 102
- GB-A- 191 214 834
- US-A- 4 426 865

## Description

The present invention relates to an apparatus and related method for heating and melting solid lubricants (Hot-Melts) in the delivery drum, to allow their transfer by pumping into the containers for servicing oiling machines, specifically electrostatic ones.

Solid lubricants for laminates, known also as "Hot Melts", "Dry-film", "Dry-lube", etc. are solid products at room temperature and their melting point is in the order of 30 ÷ 50 °C.

They are usually delivered in metal drums capable of being fully opened, into which they were poured by the manufacturer.

For their use in electrostatic oiling machines, they must be liquefied by heating beyond the melting point.

This can be obtained in various known manners, for instance using electric shell drum heaters, or introducing the drums themselves into heated chambers and leaving them therein until the content is fully melted.

It is then necessary to move the warm drums and transfer their content into the thermostatic service containers of the oiling machines.

However, this operation is not only impractical, it also requires very long times and a great expenditure of energy.

This is due to the fact the heat conductivity of the solid mass of the lubricant is very poor and therefore the energy applied to the exterior of the container (shell heaters, hot chambers) penetrates very slowly into the mass.

The product near the walls of the drum melts rather rapidly, but the temperature within the solid mass rises at an extremely slow rate, because of the poor heat conductivity of the product and of the absence of convective currents.

The present invention aims to reduce the time required for melting and facilitate transferring the product.

According to the present invention, heating bodies are set down on the upper surface of the solid mass and - progressively sinking into it - they bring thermal energy directly into the core of the mass itself.

As the product melts around the heating bodies, it is animated by convective motions which in turn effectively transmit heat to the adjacent solid mass with progressive expansion of the exchange surface. The liquefaction process thus extends at a growing rate to the entire mass contained in the drum.

When melting is completed, a pump, having its body heated, draws the product from the drum and sends it - through a pipeline, which is also heated - to the service container - of the oiling machine.

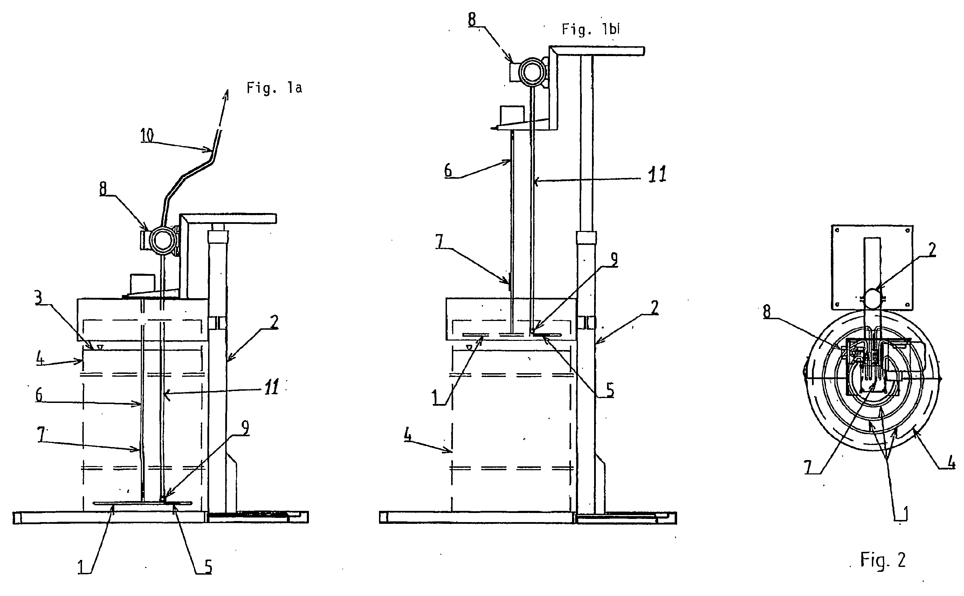

The apparatus according to the invention described hereafter with reference to Figures 1 and 2 is an effective practical embodiment of these principles.

A heating element constituted by armoured resistors shaped as concentric rings and junction spokes 1 borne by a hoist 2 is set down onto the upper surface of the product 3 to be melted contained in the original drum of the product 4. The heating element is subjected to the thrust deriving from its own weight and that of the connected movable masses (rod of the hoisting cylinder, load-bearing arms, transfer pump, suction tube, etc.).

At this point the heating element is powered, controlling its temperature by means of a heat sensor 5 applied thereto, at a value T1 sufficient for melting but such as to avoid a harmful local overheating of the product.

Note that the vertical rods 6 that connect the heating elements to the load-bearing arm are not heated: since they remain outside the product for a long time, if they were heated they would rapidly reach very high surface temperatures, such as to damage the product when they entered it.

Under the effect of the heating and of gravity, the heating element starts to sink into the mass that progressively melts around it. The liquefied product - agitated by convective currents - carries the heat and in turn transfers it to the surrounding solid surfaces with a multiplying effect.

When the heating element reaches the bottom dead centre of its travel and is near the bottom of the drum, the entire mass is liquefied with the exception of a few residual nuclei.

The heating element is therefore kept at the temperature T1 for an additional time, in order to allow the entire mass to melt. At this point, temperature control passes to a second sensor 7 mounted on the vertical rods at about one third of their length starting from the bottom, which regulates the maintenance temperature T2. The value T2 is selected slightly above the melting temperature of the product. The product can remain at this temperature T2 even for long times without undergoing any alteration of any kind.

When all the product is liquid, the transfer pump 8 can be started manually or as a result of a command originating from the automation system.

The tube for the delivery of the product 10 is heated for example by circulation of a diathermic fluid within a jacket positioned coaxially.

By way of example, the pump can be started when the signal that the product is totally liquefied and the signal of minimum level in the related service container are both present simultaneously.

The pump is stopped after a time corresponding to the transfer of the entire capacity of the drum. A bottom valve 9 mounted at the foot of the suction tube 11 prevents it from emptying, facilitating the priming of the pump in subsequent operations.

When the drum is empty, the hoist is raised to the top dead centre (see Figure 1b) with a manual command. The empty drum can thus be replaced with a full one and the entire operation can be repeated for a number of times n.

Melting times depend on the heat capacity and on the melting point of the product to be treated, as well as - obviously - on ambient temperature.

By way of example, with ambient temperature 15 °C and melting point of the product of 45 °C, the entire content of the drum is melted in about 5 hours with a power of 3 kW and a temperature of the heating element of 90 °C.

At equal ambient temperature, using a conventional electrical drum heater (shell plus bottom) having a power of 5.5 kW and working temperature of 120 °C, the time for the complete melting of a drum of Hot-Melt is about 18 hours. Similar times are required by heated chambers. Aside from any energy and economics-related considerations, this length of time is unacceptable.

An oiling machine applying 1 g/m² of Hot-Melt on the two surfaces of a 1500 mm wide metal strip at an average speed of 150 m/min. consumes:
2 x 1.5 mm x 1 g/m² x 150 m/min = 450 g/min - 0.5 1/min. Therefore, a 200 litre drum is consumed in 400 min, i.e. in less than 7 hours.

Hence, a single-drum heating and melting station would not assure the continuous operation of the line.

The present invention instead assures the continuous operation in most practical cases, with very modest energy requirements.

### List of references

- 1: heating element
- 2: hoist
- 3: upper surface of the product
- 4: drum of the product
- 5: thermal sensor
- 6: vertical rods
- 7: maintenance sensor
- 8: transfer pump
- 9.: bottom valve
- 10: pre-heated delivery tube
- 11: suction tube

## Claims

1. An apparatus for heating and melting solid lubricants in a delivery drum (4) **characterised in that** it comprises
a) a heating element (1) constituted by armoured resistors shaped as concentric rings and junction spokes
b) a hoist (2) bearing the heating element (1)
c) vertical rods (6), not heated, which connect the heating elements (1), which are movable in vertical direction to load-bearing arms
d) a first thermal sensor (5)
e) a second thermal sensor (7) mounted on the vertical rods (6)
f) a transfer pump (8)
g) a bottom valve (9) mounted at the foot of a suction tube (11)
h) a delivery tube (10) for the lubricant delivery

2. An apparatus for heating and melting solid lubricants as claimed in claim 1, **characterised in that** the heating element (1) is subjected to the thrust deriving from its own weight and that of movable masses due to the vertical rods (6), the load-bearing arms, the transfer pump (8) and the suction tube (11).

3. An apparatus as claimed in claim 1, **characterised in that** the delivery tube (10) is heated by circulation of a diathermic fluid within a jacket positioned coaxially.

4. A method of operation of an apparatus as claimed in claims 1 and 2, **characterised in that** the heating element (1) is set down on the upper surface of the solid mass contained in the drum (4) and progressively sinking into it and that after reaching the bottom of the drum (4) liquefying the entire mass of the product (3) the heating element (1) is kept at a temperature T1 determined by the first sensor for an additional predetermined time until all the mass is melted.

5. A method as claimed in claim 4, **characterised in that** the temperature of the heating element (1) is controlled by means of the first sensor (5) at the temperature T1 which is predetermined for melting but such as to prevent a harmful overheating of the product.

6. A method as claimed in claim 4, **characterised in that** temperature control for the additional predetermined time passes to the second sensor (7), which is mounted on the vertical rods (6) at about one third of their length starting from the bottom, which regulates a maintenance temperature T2.

## Patentansprüche

1. Gerät zum Erwärmen und Schmelzen fester Schmierstoffe in einer Aufgabetrommel (4), **dadurch gekennzeichnet, dass** es umfasst
a) ein Heizelement (1), gebildet aus gepanzerten Widerständen in Form von konzentrischen Ringen und Verbindungsspeichen,
b) einen Aufzug (2), der das Heizelement (1) trägt,
c) senkrechte, nicht beheizte Stäbe (6), welche die Heizelemente (1) verbinden, die sich in senkrechter Richtung zu lasttragenden Armen bewegen,
d) einen ersten Wärmefühler (5),
e) einen zweiten Wärmefühler (7), der auf die senkrechten Stäbe (6) montiert ist,
f) eine Übergabepumpe (8),
g) ein Bodenventil (9), das an den Fuß eines Saugrohrs (11) montiert ist,
h) ein Zuführrohr (10) für die Schmierstoffzufuhr.

2. Gerät zum Erwärmen und Schmelzen fester Schmierstoffe nach Anspruch 1, **dadurch gekennzeichnet, dass** das Heizelement (1) der Druckkraft ausgesetzt ist, die sich ableitet aus seinem Eigengewicht und dem Gewicht der beweglichen Massen aus den senkrechten Stäben (6), den lasttragenden Armen, der Übergabepumpe (8) und dem Saugrohr (11).

3. Gerät nach Anspruch 1, **dadurch gekennzeichnet, dass** das Zuführrohr (10) durch Zirkulation eines diathermischen Mediums in einem koaxial angeordneten Mantel beheizt wird.

4. Verfahren für den Betrieb eines Geräts nach Anspruch 1 und 2, **dadurch gekennzeichnet, dass** das Heizelement (1) auf die Oberfläche einer in der Trommel (4) enthaltenen festen Masse aufgesetzt wird und nach und nach darin einsinkt, und dass nach Erreichen des Bodens der Trommel (4) und Verflüssigung der gesamten Masse des Produkts (3) das Heizelement (1) für eine vorgegebene zusätzliche Zeit auf einer durch den ersten Fühler (5) bestimmten Temperatur T1 gehalten wird, bis die gesamte Masse geschmolzen ist.

5. Verfahren nach Anspruch 4, **dadurch gekennzeichnet, dass** die Temperatur des Heizelements (1) mit Hilfe des ersten Fühlers (5) auf die Temperatur T1 geregelt wird, die für das Schmelzen vorgegeben wird, so dass eine schädigende Überhitzung des Produkts verhindert wird.

6. Verfahren nach Anspruch 4, **dadurch gekennzeichnet, dass** die Temperaturregelung für die vorgegebene zusätzliche Zeit auf den zweiten Fühler (7) übergeht, welcher, vom Boden aus gerechnet, etwa bei einem Drittel der Länge der senkrechten Stäbe an den senkrechten Stäben (6) montiert ist und die Haltetemperatur T2 regelt.

## Revendications

1. Appareil destiné à chauffer et à fondre des lubrifiants solides, dans un tambour de distribution (4), **caractérisé en ce qu'**il comprend :
a) un élément chauffant (1) constitué de résistances blindées, formées comme des anneaux concentriques et des branches d'assemblage
b) un treuil (2) portant l'élément chauffant (1)
c) des tiges verticales (6), non chauffées, en contact avec l'élément chauffant (1), qui sont déplaçables dans une direction verticale aux bras de support de charge
d) un premier détecteur thermique (5)
e) un deuxième détecteur thermique (7) monté sur les tiges verticales (6)
f) une pompe de transfert (8)
g) une soupape de fond (9) montée au pied d'un tube d'aspiration (11)
h) un tube de distribution (10) pour la distribution du lubrifiant.

2. Appareil destiné à chauffer et à fondre des lubrifiants solides selon la revendication 1, **caractérisé en ce que** l'élément chauffant (1) est soumis à la force massique de son propre poids et à celui de masses déplaçables, en raison des tiges verticales (6), des bras de support de charge, de la pompe de transfert (8) et du tube d'aspiration (11).

3. Appareil selon la revendication 1, **caractérisé en ce que** le tube de distribution (10) est chauffé par circulation d'un fluide diathermique à l'intérieur d'un blindage positionné de façon coaxiale.

4. Méthode de fonctionnement d'un appareil selon les revendications 1 et 2, **caractérisée en ce que** l'élément chauffant (1) est baissé sur la surface du haut de la masse solide contenue dans le tambour (4) et progressivement plongé dedans, et **en ce qu'**après avoir atteint le fond du tambour (4) en liquéfiant l'ensemble de la masse de produit (3), l'élément chauffant (1) est maintenu à une température T1 déterminée par le premier détecteur, pour une durée supplémentaire prédéterminée, jusqu'à ce que toute la masse ait fondu.

5. Méthode selon la revendication 4, **caractérisée en ce que** la température de l'élément chauffant (1) est contrôlée au moyen du premier détecteur (5), à la température T1 qui est prédéterminée pour la fonte, mais de manière à empêcher une surchauffe nuisible du produit.

6. Méthode selon la revendication 4, **caractérisée en ce que** le contrôle de température pour la durée supplémentaire prédéterminée est effectué par le deuxième détecteur (7), qui est monté sur les tiges verticales (6), à environ un tiers de leur longueur en partant du bas, permettant ainsi de réguler une température de maintien T2.
